# FASCICULE DE BREVET EUROPEEN

(11) **EP 4 454 221 B1**
(45) Date de publication et mention de la délivrance du brevet: **24.09.2025**
(21) Numéro de dépôt: 22836259.6
(22) Date de dépôt: 20.12.2022
(51) Int. Cl.: H04L 12/42, H04L 12/437, H04J 14/02

(54) **SYSTÈME POUR LA TRANSMISSION DE DONNÉES ENTRE DISPOSITIFS CLIENTS, PROCÉDÉ DE MISE EN OEUVRE D'UN TEL SYSTÈME**
SYSTEM ZUR DATENÜBERTRAGUNG ZWISCHEN CLIENT-VORRICHTUNGEN UND VERFAHREN ZUR IMPLEMENTIERUNG SOLCH EINES SYSTEMS
SYSTEM FOR TRANSMITTING DATA BETWEEN CLIENT DEVICES, AND METHOD FOR IMPLEMENTING SUCH A SYSTEM

(30) Priorité: 21.12.2021 FR 2114136
(43) Date de publication de la demande: 30.10.2024
(73) Titulaire: LATELEC, 31500 Toulouse (FR)
(72) Inventeur: CROS, Guillaume, 31240 L'Union (FR); TROLLAT, Manuel, 31650 Saint-Orens de Gameville (FR); REBIERE, Yoann, 31320 Pechbusque (FR); PINARD, Benoit, 38600 Fontaine (FR)
(74) Mandataire: Ipside
(86) Numéro de dépôt international: PCT/EP2022/086837
(87) Numéro de publication internationale: WO 2023/118035

(56) Documents cités:
- EP-A1- 1 890 434
- EP-A1- 1 890 434
- US-A1- 2010 271 935

## Description

### Domaine de l'invention

Le domaine de l'invention est celui des systèmes de transmissions de données entre dispositifs clients appartenant à un système numérique.

L'invention se rapporte plus particulièrement à un tel système pouvant se substituer à un bus de données au standard CAN, pour « Controller Area Network » en anglais.

L'invention a ainsi de nombreuses applications dans tous les domaines dans lesquels de tels bus CAN sont utilisés. Il s'agit notamment, mais non exclusivement, du domaine automobile ou du domaine aéronautique.

### Art antérieur et ses inconvénients

Un bus informatique est un dispositif de transmission de données partagé entre plusieurs dispositifs clients d'un système numérique. Plus particulièrement, un bus se distingue généralement d'une liaison point à point qui ne concerne que deux dispositifs clients qui en ont l'usage exclusif. Un bus se distingue également d'un réseau qui implique des participants indépendants entre eux, c'est-à-dire pouvant fonctionner de manière autonome, et qui comprend plusieurs canaux permettant des communications simultanées entre les différents participants au réseau.

Le bus CAN, standardisé dans la norme ISO (pour « International Organization for Standardization » en anglais) 11898, est très utilisé dans l'automobile et l'aéronautique. Il permet notamment de relier des capteurs facilement. Dans l'aéronautique, la norme décrivant l'utilisation du bus CAN à bord d'un aéronef est l'ARINC (pour « Aeronautical Radio, Incorporated » en anglais) 825.

Plus particulièrement, le bus CAN comprend une couche physique dans laquelle tous les dispositifs clients sont connectés à un même câble, du type « paire cuivre », terminé de part et d'autre par une impédance de terminaison implémentant une fonction bouchon (i.e. évitant la réflexion des trames de données en terminaison de câble). Une telle topologie de couche physique permet une mise en œuvre simple, ce qui en fait l'une des topologies les moins coûteuses à mettre en place.

Cependant, l'utilisation de câbles en cuivre implique de prendre en compte des contraintes de compatibilité électromagnétique lors de la conception des équipements embarqués, particulièrement des contraintes de type foudre pour un aéronef.

Par ailleurs, dans ce type de topologie, la défaillance du câble (e.g. en cas de rupture) entraine la défaillance de l'ensemble du système de communication : aucun dispositif client connecté au bus ne peut plus communiquer avec un autre dispositif client connecté au bus en question.

De même, en cas de besoin d'ajout de bus CAN supplémentaires et indépendants en complément d'un bus CAN déjà existant, il est nécessaire d'installer autant de nouveaux câbles que de bus CAN supplémentaires. En effet, un câble donné ne peut constituer la couche physique que d'un seul bus CAN. Par ailleurs, la configuration d'un bus CAN nécessite souvent de nombreuses opérations, ce qui rend la maintenance de ce genre de système coûteuse.

Il existe ainsi un besoin pour une technique permettant l'interconnexion de dispositifs clients exploitant le protocole CAN pour l'échange de données et qui ne présente pas les inconvénients de l'art antérieur décrits ci-dessus.

Le document EP 1 890 434 A1 représente l'état de la technique qui est pertinent par rapport à ce qui est divulgué dans le présent document.

### Exposé de l'invention

Dans un mode de réalisation de l'invention, il est proposé un procédé de mise en œuvre d'un système pour la transmission de données en mettant en œuvre un protocole CAN de bout en bout entre des dispositifs clients connectés audit système, le système comprenant :
- un médium de transmission de données comprenant une pluralité de sections de fibre optique,
- une pluralité de dispositifs d'interface configurés pour permettre chacun la connexion de manière communicative d'au moins un dispositif client avec le système en mettant en œuvre un protocole de transmission de données au standard CAN.

Les dispositifs d'interface sont connectés entre eux de manière communicative via le médium de transmission de données en mettant en œuvre un autre protocole de transmission de données, dit protocole interne, et en définissant une topologie de transmission de données en anneau.

Les dispositifs d'interface sont connectés de manière communicative entre eux selon les deux sens de parcours de l'anneau de sorte à définir deux chaines de transmission de données en des directions opposées le long de l'anneau.

Un tel procédé comprend une élection d'un dispositif d'interface maître parmi les dispositifs d'interface, le dispositif d'interface maître étant configuré pour implémenter une fonction bouchon stoppant la circulation des trames internes dans les deux chaines de transmission de données. Le procédé comprend également au moins une étape de transmission de données comprenant :
- une encapsulation, par un premier dispositif d'interface, d'au moins une trame de données reçue dans un format selon le protocole CAN, dite trame CAN, depuis un dispositif client, dit dispositif client source, connecté de manière communicative au premier dispositif d'interface, l'encapsulation délivrant au moins une trame de données dans un format selon le protocole interne, dite trame interne ; et
- une transmission, par le premier dispositif d'interface, de ladite au moins une trame interne dans les deux chaines de transmission de données.

Ainsi, l'invention propose une solution nouvelle et inventive pour permettre la transmission de données entre dispositifs clients mettant en œuvre un protocole CAN, e.g. selon la norme ISO 11898.

Plus particulièrement, les trames CAN échangées entre un dispositif client et le dispositif d'interface ne sont pas modifiées. Les trames en question sont véhiculées telles qu'elles dans les trames selon le protocole interne. Ceci permet de simplifier la mise en œuvre de la conversion de format entre le protocole CAN et le protocole interne. Les dispositifs d'interface permettent aux dispositifs clients de mettre en œuvre le protocole CAN de bout en bout. Ainsi, aucune modification des dispositifs clients n'est nécessaire.

Par ailleurs, la mise en œuvre d'un médium de transmission de données basé sur de la fibre optique permet de s'affranchir des contraintes de compatibilité électromagnétique telles que rencontrées avec la couche physique selon le standard CAN, basée sur un câblage du type « paire cuivre ». Par ailleurs le débit offert sur un médium de transmission du type fibre optique est supérieur à celui d'une « paire cuivre », permettant par exemple d'envisager de multiplexer un grand nombre de dispositifs clients sur un même medium.

La topologie en anneau permet que les dispositifs d'interface restent connectés de manière communicative entre eux même en cas de défaillance localisée du médium de transmission (e.g. rupture de l'anneau). Par ailleurs, en cas de défaillance du médium de transmission (e.g. rupture de l'anneau), tous les dispositifs d'interface du système continuent à avoir accès séquentiellement aux données transmises par l'un d'entre eux, les données pouvant circuler dans les deux sens. La fonction bouchon permet de stopper la propagation des trames interne, évitant par là-même une circulation infinie des trames internes dans l'anneau.

Selon certains modes de réalisation, l'étape de transmission de données comprend les étapes suivantes mises en œuvre par au moins un deuxième dispositif d'interface ayant reçu ladite au moins une trame interne via une des deux chaines de transmission de données :
- une extraction, au sein de ladite au moins une trame interne, d'au moins une trame CAN à destination d'un dispositif client, dit dispositif client destinataire, connecté de manière communicative au deuxième dispositif d'interface ; et
- une transmission de ladite au moins une trame CAN au dispositif client destinataire. Selon certains modes de réalisation, ladite au moins une trame interne comprend des champs de données associés à des canaux de transmission distincts. Chaque canal de transmission véhicule des trames CAN associées à des dispositifs clients appartenant à un bus CAN respectif.

Ainsi, différents bus CAN sont multiplexés sur un même système selon la présente technique. Selon certains modes de réalisation, le procédé comprend une étape de gestion du système comprenant :
- une transmission, par le dispositif d'interface maître et pour chaque chaine de transmission de données, d'une trame interne véhiculant un jeton incrémental représentatif d'un nombre de réceptions successives de la trame interne véhiculant le jeton par des dispositifs d'interface le long de la chaine de transmission de données correspondante.

Ainsi, l'intégrité du système est surveillée par l'envoi de trames internes comprenant de tels jetons.

Selon certains modes de réalisation, l'étape de gestion du système comprend une mise à jour du jeton incrémental comprenant :
- une réception, par un dispositif d'interface donné et pour une chaine de transmission de données donnée, de la trame interne correspondante véhiculant le jeton ;
- un incrément, au sein de la trame interne correspondante, du jeton de sorte à être représentatif de la réception de la trame par le dispositif d'interface, l'incrément délivrant une trame interne mise à jour ; et
- une transmission, par le dispositif d'interface, de la trame interne mise à jour dans la chaine de transmission de données donnée.

Ainsi, la valeur du jeton une fois revenu au dispositif maître permet d'identifier le nombre de dispositifs d'interface présents le long du médium de transmission de données.

Selon certains modes de réalisation, le dispositif d'interface donné exécute en outre, avant transmission de la trame interne mise à jour, une encapsulation, au sein de la trame interne mise à jour, d'au moins une trame CAN reçue depuis un dispositif client connecté de manière communicative au dispositif d'interface donné.

Ainsi, le nombre de trames circulant sur l'anneau est réduit en concaténant les fonctions de surveillance, via la présence de jetons, et la transmission de données.

Selon certains modes de réalisation, lorsque le dispositif d'interface maître n'a pas reçu une trame interne véhiculant un jeton donné avant l'expiration d'une durée prédéterminée comptée à partir de la transmission du jeton donné par le dispositif d'interface maître, le dispositif d'interface maître est reconfiguré pour ne plus implémenter la fonction bouchon de sorte à permettre la circulation des trames internes le long du médium de transmission de données.

Ainsi, une défaillance (e.g. du type coupure du medium de transmission ou défaillance d'un dispositif d'interface qui n'est plus apte à transmettre les trames internes), est détectée sur l'anneau. La fonction bouchon est supprimée car, d'une part, la défaillance précitée implémente déjà une telle fonction et, d'autre part, le dispositif maître doit laisser circuler les trames internes dans les deux sens pour garantir que tous les dispositifs d'interfaces peuvent avoir accès aux trames internes malgré la défaillance.

Selon certains modes de réalisation, le dispositif d'interface maître met en œuvre périodiquement la transmission d'une trame interne véhiculant un jeton incrémental. Au moins un dispositif d'interface génère une information d'alerte lorsque le dispositif d'interface ne reçoit pas de trame interne véhiculant un jeton incrémental pendant une durée prédéterminée supérieure à la période de transmission des trames interne par le dispositif d'interface maître.

Par exemple, l'alerte peut être représentative du fait que le dispositif maître est défaillant, ou que différentes défaillances sur le système (e.g. différentes coupures du medium de transmission ou différentes défaillances de dispositifs d'interface qui ne sont plus aptes à transmettre les trames internes), ont isolé le dispositif d'interface qui a généré l'alerte du dispositif maître dans les deux sens de circulation sur l'anneau. Dans ce dernier cas, le dispositif maître et le dispositif d'interface qui a généré l'alerte se retrouvent dans deux parties du système isolées l'une de l'autre.

Selon certains modes de réalisation, l'étape d'élection d'un dispositif d'interface maître est à nouveau mise en œuvre en réponse à la génération de l'information d'alerte.

Par exemple, dans le cas où le dispositif maître est identifié comme hors service, un nouveau dispositif maître est élu en lieu et place de l'ancien. Alternativement, lorsque le dispositif maître et le dispositif d'interface qui a généré l'alerte se retrouvent dans deux parties isolées l'une de l'autre du système, un nouveau dispositif maître est élu pour la partie du système dans laquelle se trouve le dispositif d'interface qui a généré l'alerte.

L'invention concerne également un programme d'ordinateur comprenant des instructions de code de programme pour la mise en œuvre d'un procédé tel que décrit précédemment, selon l'un quelconque de ses différents modes de réalisation, lorsqu'il est exécuté sur un ordinateur. L'invention concerne également un dispositif électronique de mise en œuvre d'un dispositif d'interface d'un système tel que décrit précédemment, selon l'un quelconque de ses différents modes de réalisation. Un tel dispositif électronique comprend une machine de calcul reprogrammable ou une machine de calcul dédiée configurée pour mettre en œuvre les étapes du procédé tel que décrit précédemment (selon l'un quelconque des différents modes de réalisation précités). Ainsi, les caractéristiques et avantages de ce dispositif sont les mêmes que ceux des étapes correspondantes du procédé décrit précédemment. Par conséquent, ils ne sont pas détaillés plus amplement.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig.1] représente un système pour la transmission de données entre dispositifs clients selon un mode de réalisation de l'invention ;
[Fig.1a] représente un premier exemple de défaillance du système de la [Fig.1] ;
[Fig.1b] représente un deuxième exemple de défaillance du système de la [Fig.1] ;
[Fig.2] représente un exemple de structure d'un dispositif d'interface du système de la [Fig.1] selon un mode de réalisation de l'invention ;
[Fig.2a] représente un exemple de structure d'un dispositif électronique, tel que présent dans un dispositif d'interface, et permettant la mise en œuvre des étapes du procédé de la [Fig.3] selon un mode de réalisation de l'invention ;
[Fig.3] représente les étapes d'un procédé de mise en œuvre du système de la [Fig.1] selon un mode de réalisation de l'invention ;
[Fig.4] représente un format de trame de données utilisée au sein du système de la [Fig.1] selon un mode de réalisation de l'invention ;
[Fig.4a] représente un format de trame de données utilisée pour véhiculer des informations au sein du système de la [Fig.1] selon un mode de réalisation de l'invention ;
[Fig.4b] représente un format de trame de données utilisée pour véhiculer des informations au sein du système de la [Fig.1] selon un autre mode de réalisation de l'invention ; et
[Fig.4c] représente le format d'un paquet de données de la trame de la [Fig.4a] ou de la trame de la [Fig.4b] selon un mode de réalisation de l'invention.

### Description détaillée de modes de réalisation de l'invention

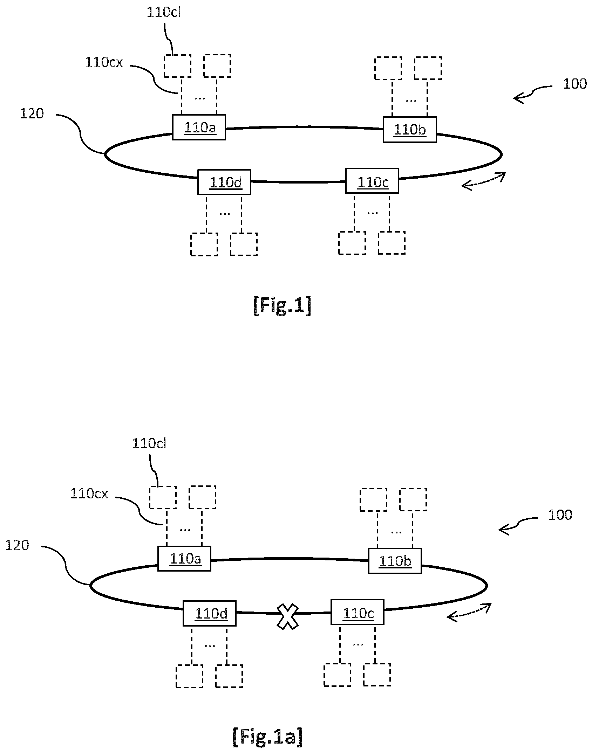

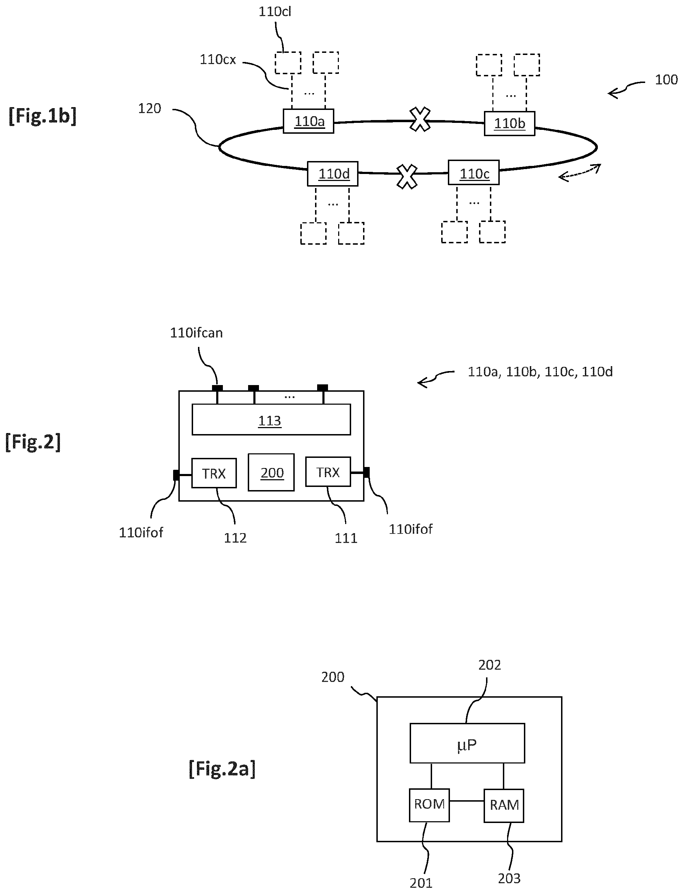

On présente désormais, en relation avec la **[****Fig.1****],** un système 100 pour la transmission de données entre dispositifs clients 110cl selon un mode de réalisation de l'invention. De tels dispositifs clients 110cl sont par exemple des capteurs devant faire remonter leurs mesures à un serveur central, ou bien toute autre entité numérique devant communiquer avec au moins un autre dispositif client 110cl.

Le système 100 est un système du type bus de données permettant la transmission de données entre les dispositifs clients 110cl lorsque les dispositifs clients 110cl sont connectés de manière communicative au système 100. Pour ce faire, le système 100 comprend une pluralité de dispositifs d'interface 110a, 110b, 110c, 110d configurés pour permettre chacun la connexion de manière communicative d'au moins un dispositif client 110cl correspondant avec le système 100. La communication entre les dispositifs d'interface 110a, 110b, 110c, 110d et les dispositifs client 110cl qui leur sont connectés se fait en mettant en œuvre un protocole de transmission de données au standard CAN, dit protocole CAN.

Le système 100 comprend en outre un médium de transmission de données comprenant une pluralité de sections de fibre optique 120 reliant chacune deux des dispositifs d'interface 110a, 110b, 110c, 110d. En effet, la mise en œuvre d'un médium de transmission de données basé sur de la fibre optique permet de s'affranchir des contraintes de compatibilité électromagnétique telles que rencontrées avec la couche physique selon le standard CAN, basée sur un câblage du type « paire cuivre ». En outre, le débit offert sur un médium de transmission du type fibre optique est supérieur à celui d'une « paire cuivre », permettant par exemple d'envisager de multiplexer un grand nombre de dispositifs clients sur un même medium.

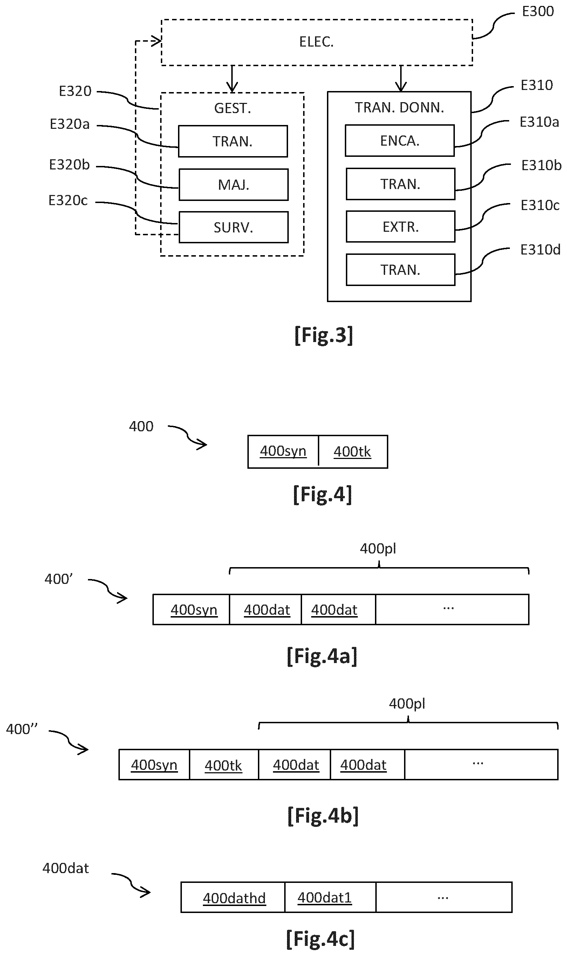

Le médium de transmission de données est par ailleurs configuré pour définir une topologie de transmission de données en anneau. Chaque dispositif d'interface 110a, 110b, 110c, 110d est ainsi connecté de manière communicative à deux autres dispositifs d'interface 110a, 110b, 110c, 110d, définissant deux chaines de transmission de données en des directions opposées le long de l'anneau. Ainsi, en cas de défaillance du médium de transmission (e.g. rupture de l'anneau comme illustré par la croix sur la **[****Fig.1a****]**), tous les dispositifs d'interface du système continuent à avoir accès séquentiellement aux données transmises par l'un d'entre eux, les données pouvant circuler dans les deux sens. Toutefois, en cas de double rupture de l'anneau, comme illustré par les deux croix sur la **[****Fig.1b****],** deux portions distinctes et isolées l'une de l'autre sont créés. Le système 100 peut néanmoins continuer à fonctionner comme détaillé ci-dessous en relation avec la [Fig.3]. Cependant, les dispositifs clients 110cl de l'une des deux portions n'auront pas accès aux dispositifs clients 110cl de l'autre portion.

Dans d'autres modes de réalisation, les dispositifs d'interface 110a, 110b, 110c, 110d sont connectés de manière communicative entre eux de sorte à définir une seule chaine de transmission de données le long de l'anneau. En effet, quand bien même le fonctionnement se trouve dégradé en cas de rupture de l'anneau, une telle approche permet de réduire le coût de chaque dispositif d'interface 110a, 110b, 110c, 110d puisqu'un nombre réduit d'émetteurs et de récepteurs se trouve nécessaire pour implémenter une seule chaine de transmission de données comme détaillé ci-dessous en relation avec la [Fig.2].

De retour à la [Fig.1], les dispositifs d'interface 110a, 110b, 110c, 110d sont connectés entre eux de manière communicative via le médium de transmission de données en mettant en œuvre un autre protocole de transmission de données, dit protocole interne, détaillé plus avant ci-dessous en relation avec les [Fig.3], [Fig.4], [Fig.4a], [Fig.4b] et [Fig.4c]. Cependant, les dispositifs d'interface 110a, 110b, 110c, 110d sont configurés pour qu'au moins un dispositif client 110cl donné, connecté de manière communicative au système 100 via un dispositif d'interface 110a, 110b, 110c, 110d, puisse transmettre des données à destination d'au moins un autre dispositif client 110cl, connecté de manière communicative au système 100 via un autre dispositif d'interface 110a, 110b, 110c, 110d, en mettant en œuvre le protocole CAN de bout en bout. Ainsi, aucune modification du protocole de communication des dispositifs clients 110cl n'est nécessaire. Par ailleurs, la connexion 100cx entre les dispositifs d'interface 110a, 110b, 110c, 110d et les dispositifs clients 110cl met en œuvre une couche physique au standard CAN, e.g. via un câblage du type « paire cuivre ». De la sorte les dispositifs clients 110cl peuvent être directement connectés aux dispositifs d'interface 110a, 110b, 110c, 110d. Cependant, dans d'autres modes de réalisation, les dispositifs d'interface 110a, 110b, 110c, 110d mettent en œuvre un autre type de connectique et une adaptation de la couche physique est nécessaire pour s'interfacer avec les dispositifs clients 110cl, e.g. via un boitier d'interface.

On présente désormais, en relation avec la **[****Fig.2****],** un exemple de structure d'un dispositif d'interface 110a, 110b, 110c, 110d selon un mode de réalisation de l'invention.

Plus particulièrement, un tel dispositif d'interface 110a, 110b, 110c, 110d comprend un contrôleur 113 gérant les interfaces 110ifcan permettant le raccordement de manière communicative avec les dispositifs clients 110cl.

Pour chaque tronçon de fibre optique auquel le dispositif d'interface 110a, 110b, 110c, 110d est destiné à être connecté, un boitier 111, 112 émetteur/récepteur permet la communication selon le protocole interne et selon les deux chaines de transmission de données précitées. Un tel boitier 111, 112 est par exemple un boitier au standard SFP (pour « small form-factor pluggable » en anglais). Les boitiers 111, 112 s'interfacent avec les tronçons de fibre optique via une connectique 110ifof adaptée. Chaque boitier 111, 112 comprenant à la fois un émetteur et un récepteur, un dispositif d'interface 110a, 110b, 110c, 110d donné comprend ainsi pour chaque chaine de transmission le long de l'anneau :
- un récepteur destiné à recevoir les données transmises par le dispositif d'interface précédent dans la chaine de transmission considérée ; et
- un émetteur destiné à transmettre les données au dispositif d'interface suivant dans la chaine de transmission considérée.

Dans les modes de réalisation précités dans lesquels les dispositifs d'interface 110a, 110b, 110c, 110d sont connectés de manière communicative entre eux de sorte à définir une seule chaine de transmission de données le long de l'anneau, chaque boitier 111, 112 peut ne comprendre qu'un émetteur et qu'un récepteur respectivement.

De retour à la [Fig.2], un dispositif électronique 200 permet la mise en œuvre des étapes du procédé de mise en œuvre du système 100 décrit ci-dessous en relation avec la [Fig.3]. Pour ce faire, le dispositif électronique 200 comprend par exemple **([****Fig.2a****])** une mémoire vive 203 (par exemple une mémoire RAM), une unité de traitement 202 équipée par exemple d'un processeur, et pilotée par un programme d'ordinateur stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202.

Cette [Fig.2a] illustre seulement une manière particulière, parmi plusieurs possibles, de réaliser le dispositif électronique 200 afin qu'il effectue certaines étapes du procédé de mise en œuvre du système 100 selon l'invention (selon l'un quelconque des modes de réalisation et/ou variantes décrit(e)s ci-dessous en relation avec la [Fig.3]). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif électronique 200 est réalisé avec une machine de calcul reprogrammable, le programme correspondant (c'est-à-dire la séquence d'instructions) pourra être stocké dans un médium de stockage amovible (tel que par exemple un CD-ROM, un DVD-ROM, une clé USB) ou non, ce médium de stockage étant lisible partiellement ou totalement par un ordinateur ou un processeur.

On présente désormais, en relation avec la **[****Fig.3****],** les étapes d'un procédé de mise en œuvre du système 100 selon un mode de réalisation de l'invention. Des exemples de formats de trames de données transmises sur le medium de transmission par les dispositifs d'interface 110a, 110b, 110c, 110d sont décrit en relation avec les **[****Fig.4], [Fig.4a], [Fig.4b] et [Fig.4c****].**

Plus particulièrement, le procédé de mise en œuvre comprend une **étape E300** d'élection d'un dispositif d'interface maître parmi les dispositifs d'interface 110a, 110b, 110c, 110d. Un tel dispositif d'interface maître est configuré pour implémenter une fonction bouchon stoppant la circulation des trames de données selon le protocole interne, dites trames internes 400, 400', 400", dans les deux chaines de transmission de données le long du medium de transmission. Plus particulièrement, la fonction bouchon permet de stopper la propagation des trames internes 400, 400', 400", évitant par là-même une circulation infinie des trames internes 400, 400', 400" dans l'anneau. Une telle élection se fait par exemple via une méthode connue en soit, e.g. sur la base de l'adresse MAC (pour « Media Access Control » en anglais) et d'un numéro de priorité paramétrable par un administrateur du système 100.

Cependant, dans certains modes de réalisation, l'étape E300 n'est pas mise en œuvre, e.g. lorsqu'un dispositif d'interface 110a, 110b, 110c, 110d donné implémente par défaut la fonction bouchon précitée.

De retour à la [Fig.3], le procédé de mise en œuvre comprend une **étape E310** de transmission de données entre dispositifs clients 110cl.

Plus particulièrement, lors d'une **étape E310a,** un premier dispositif d'interface 110a, 110b, 110c, 110d encapsule au moins une trame de données reçue dans un format selon le protocole CAN, dite trame CAN, depuis un dispositif client 110cl, dit dispositif client 110cl source, connecté de manière communicative au premier dispositif d'interface 110a, 110b, 110c, 110d. L'encapsulation délivre une (ou plusieurs) trame interne 400'.

Lors d'une **étape E310b,** le premier dispositif d'interface 110a, 110b, 110c, 110d transmet la (ou les) trame interne 400' dans les deux chaines de transmission de données.

Ainsi, les trames CAN échangées entre un dispositif client 110cl et le dispositif d'interface 110a, 110b, 110c, 110d ne sont pas modifiées. Les trames en question sont véhiculées telles qu'elles dans les trames internes 400'. Comme illustré sur la [Fig.4a], une trame CAN est encapsulée telle qu'elle via un (ou plusieurs) paquet de données 400dat de la partie utile 400pl de la trame interne 400'. Ceci permet de simplifier la mise en œuvre de la conversion de format entre le protocole CAN et le protocole interne. Par exemple, un tel paquet de données 400dat comprend un entête 400dathd et les données utiles 400dat1 ([Fig.4c]). Par exemple, l'entête 400dathd permet d'identifier différentes trames CAN, ou même différents canaux de transmission distincts. Dans ce dernier cas, chaque canal de transmission peut par exemple véhiculer des trames CAN associées à des dispositifs clients 110cl appartenant à un bus CAN respectif. Ainsi, différents bus CAN sont multiplexés sur un même système 100 selon la présente technique. Par ailleurs, les trames internes 400, 400', 400", comprennent un mot de synchronisation 400syn permettant aux récepteurs des boitiers 111, 112 de se synchroniser sur les trames internes 400, 400', 400" reçues.

De retour à la [Fig.3], lors d'une **étape E310c,** un deuxième dispositif d'interface 110a, 110b, 110c, 110d ayant reçu la (ou les) trame interne 400' via au moins une des deux chaines de transmission de données extrait au sein de la (ou les) trame interne 400', au moins une trame CAN à destination d'un dispositif client 110cl, dit dispositif client 110cl destinataire, connecté de manière communicative au deuxième dispositif d'interface 110a, 110b, 110c, 110d en question. Lors d'une **étape E310d,** le deuxième dispositif d'interface 110a, 110b, 110c, 110d transmet ladite au moins une trame CAN à destination du dispositif client 110cl destinataire. Ainsi, les dispositifs d'interface 110a, 110b, 110c, 110d permettent aux dispositifs clients 110cl de mettre en œuvre le protocole CAN de bout en bout. Ainsi, aucune modification des dispositifs clients 110cl n'est nécessaire.

Le procédé de mise en œuvre comprend en outre une **étape E320** facultative de gestion du système 100.

Ainsi, lors d'une **étape E320a,** le dispositif d'interface maître transmet, pour chaque chaine de transmission de données, une trame interne 400 véhiculant un jeton 400tk incrémental représentatif d'un nombre de réceptions successives de la trame interne 400 en question par des dispositifs d'interface 110a, 110b, 110c, 110d le long de la chaine de transmission de données correspondante.

Ainsi, l'intégrité du système est surveillée par l'envoi de trames internes comprenant de tels jetons.

Plus particulièrement, lors d'une **étape E320b,** le jeton 400tk incrémental de la trame interne 400 transmise par le dispositif d'interface maître lors de l'étape E320a est mis à jour. Pour ce faire, un dispositif d'interface 110a, 110b, 110c, 110d donné réceptionne, pour une chaine de transmission de données donnée, la trame interne 400 en question véhiculant le jeton 400tk incrémental. Le dispositif d'interface 110a, 110b, 110c, 110d donné incrémente, au sein de la trame interne 400 en question, le jeton 400tk de sorte à être représentatif de la réception de la trame par le dispositif d'interface 110a, 110b, 110c, 110d donné. Après incrément, une trame interne 400 mise à jour est obtenue. Le dispositif d'interface 110a, 110b, 110c, 110d donné transmet la trame interne 400 mise à jour dans la chaine de transmission de données donnée.

Ainsi, la valeur du jeton 400tk incrémental une fois revenu au dispositif maître permet d'identifier le nombre de dispositifs d'interface 110a, 110b, 110c, 110d présents le long du médium de transmission de données.

Dans certains modes de réalisation, le dispositif d'interface 110a, 110b, 110c, 110d donné exécute en outre, avant transmission de la trame interne 400 mise à jour, une encapsulation, au sein de la trame interne 400 mise à jour, d'au moins une trame CAN reçue depuis un dispositif client 110cl connecté de manière communicative au dispositif d'interface 110a, 110b, 110c, 110d donné. Ainsi, une trame 400" telle que représentée sur la [Fig.4c] est obtenue. Une telle trame 400" comprend entre autres le jeton 400tk et des données utiles 400dat. Les étapes précitées E310a, E310b, E310c et E310d peuvent ainsi être mises en œuvre sur la base de telles trames 400" véhiculant à la fois un jeton 400tk et des données utiles 400dat.

Ainsi, le nombre de trames internes 400, 400', 400" circulant sur l'anneau est réduit en concaténant les fonctions de surveillance, via la présence de jetons 400tk, et la transmission de données 400dat.

Dans certains modes de réalisation, lorsque le dispositif d'interface maître n'a pas reçu une trame interne 400, 400" véhiculant un jeton 400tk donné avant l'expiration d'une durée prédéterminée comptée à partir de la transmission dudit jeton 400tk donné par le dispositif d'interface maître, le dispositif d'interface maître est reconfiguré pour ne plus implémenter la fonction bouchon précitée.

Ainsi, lorsqu'une défaillance (e.g. du type coupure du medium de transmission comme illustré sur la [Fig.1a], ou défaillance d'un dispositif d'interface 110a, 110b, 110c, 110d qui n'est plus apte à transmettre les trames internes 400, 400', 400") est détectée sur l'anneau, la fonction bouchon est supprimée. En d'autres termes, le dispositif d'interface maître transmet maintenant, pour chaque chaine de transmission de données, les trames internes 400, 400', 400" reçues via la chaine de transmission de données en question. En effet, d'une part, la défaillance précitée implémente déjà une telle fonction bouchon et, d'autre part, le dispositif maître doit laisser circuler les trames internes 400, 400', 400" dans les deux sens pour garantir que tous les dispositifs d'interfaces 110a, 110b, 110c, 110d peuvent avoir accès aux trames internes 400, 400', 400" malgré la défaillance.

De retour à la [Fig.3], le dispositif d'interface maître met en œuvre périodiquement l'étape E320a de transmission d'une trame interne véhiculant un jeton incrémental. Ainsi, lors d'une **étape E320c,** un (ou plusieurs) dispositif d'interface 110a, 110b, 110c, 110d génère une information d'alerte lorsque le dispositif d'interface 110a, 110b, 110c, 110d en question ne reçoit pas de trame interne 400, 400" véhiculant un jeton 400tk incrémental pendant une durée prédéterminée supérieure à la période de transmission des trames interne par le dispositif d'interface maître.

Par exemple, l'alerte peut être représentative du fait que le dispositif d'interface maître est défaillant. L'alerte peut également être représentative du fait que différentes défaillances sur le système (e.g. différentes coupures du medium de transmission ou différentes défaillances de dispositifs d'interface qui ne sont plus aptes à transmettre les trames internes), ont isolé, du dispositif maître et dans les deux sens de circulation sur l'anneau, le dispositif d'interface 110a, 110b, 110c, 110d qui a généré l'alerte. Ce dernier cas correspond au cas illustré sur la [Fig.1b] si le dispositif maître (dispositif d'interface 110a) et le dispositif d'interface qui a généré l'alerte (dispositif d'interface 110b) se retrouvent dans deux parties du système 100 isolées l'une de l'autre pour ce qui est de la communication de trames de données internes (par exemple si le dispositif d'interface maître est le dispositif d'interface 110a et le dispositif d'interface ayant généré l'alerte est le dispositif d'interface 110b).

De retour à la [Fig.3], en réponse à la génération de l'information d'alerte, l'étape E300 d'élection d'un dispositif d'interface maître est à nouveau mise en œuvre.

Par exemple, dans le cas où le dispositif maître est identifié comme hors service, un nouveau dispositif maître est élu en lieu et place de l'ancien. Alternativement, lorsque le dispositif maître et le dispositif d'interface qui a généré l'alerte se retrouvent dans deux parties isolées l'une de l'autre du système, un nouveau dispositif maître est élu pour la partie du système dans laquelle se trouve le dispositif d'interface qui a généré l'alerte.

## Revendications

1. Procédé de mise en œuvre d'un système pour la transmission de données en mettant en œuvre un protocole CAN, pour « Controller Area Network » en anglais, de bout en bout entre des dispositifs clients connectés audit système, le système comprenant :
- un médium (120) de transmission de données comprenant une pluralité de sections de fibre optique,
- une pluralité de dispositifs d'interface (110a, 110b, 110c, 110d) configurés pour permettre chacun la connexion de manière communicative d'au moins un dispositif client (110cl) avec le système en mettant en œuvre un protocole de transmission de données au standard CAN, les dispositifs d'interface étant connectés entre eux de manière communicative via le médium de transmission de données en mettant en œuvre un autre protocole de transmission de données, dit protocole interne, et en définissant une topologie de transmission de données en anneau,
les dispositifs d'interface étant connectés de manière communicative entre eux selon les deux sens de parcours de l'anneau de sorte à définir deux chaines de transmission de données en des directions opposées le long de l'anneau,
- une élection (E300) d'un dispositif d'interface maître parmi les dispositifs d'interface, le dispositif d'interface maître étant configuré pour implémenter une fonction bouchon stoppant la circulation des trames internes dans les deux chaines de transmission de données, et en ce qu'il comprend au moins une étape (E310) de transmission de données comprenant :
- une encapsulation (E310a), par un premier dispositif d'interface, d'au moins une trame de données reçue dans un format selon le protocole CAN, dite trame CAN, depuis un dispositif client, dit dispositif client source, connecté de manière communicative au premier dispositif d'interface, l'encapsulation délivrant au moins une trame de données dans un format selon le protocole interne, dite trame interne ; et
- une transmission (E310b), par le premier dispositif d'interface, de ladite au moins une trame interne dans les deux chaines de transmission de données.

2. Procédé selon la revendication 1, dans lequel l'étape (E310) de transmission de données comprend les étapes suivantes mises en œuvre par au moins un deuxième dispositif d'interface ayant reçu ladite au moins une trame interne via une des deux chaines de transmission de données :
- une extraction (E310c), au sein de ladite au moins une trame interne, d'au moins une trame CAN à destination d'un dispositif client, dit dispositif client destinataire, connecté de manière communicative audit deuxième dispositif d'interface ; et
- une transmission (E310d) de ladite au moins une trame CAN audit dispositif client destinataire.

3. Procédé selon la revendication 1 ou 2, dans lequel ladite au moins une trame interne comprend des champs de données associés à des canaux de transmission distincts, chaque canal de transmission véhiculant des trames CAN associées à des dispositifs clients appartenant à un bus CAN respectif.

4. Procédé selon l'une quelconque des revendications 1 à 3, comprenant une étape (E320) de gestion du système comprenant :
- une transmission (E320a), par le dispositif d'interface maître et pour chaque chaine de transmission de données, d'une trame interne véhiculant un jeton incrémental représentatif d'un nombre de réceptions successives de ladite trame interne véhiculant le jeton par des dispositifs d'interface le long de la chaine de transmission de données correspondante.

5. Procédé selon la revendication 4, dans lequel l'étape (E320) de gestion du système comprend une mise à jour (E320b) du jeton incrémental comprenant :
- une réception, par un dispositif d'interface donné et pour une chaine de transmission de données donnée, de la trame interne correspondante véhiculant ledit jeton ;
- un incrément, au sein de ladite trame interne correspondante, du jeton de sorte à être représentatif de la réception de la trame par le dispositif d'interface, ledit incrément délivrant une trame interne mise à jour ; et
- une transmission, par ledit dispositif d'interface, de ladite trame interne mise à jour dans la chaine de transmission de données donnée.

6. Procédé selon la revendication 5, dans lequel le dispositif d'interface donné exécute en outre, avant transmission de ladite trame interne mise à jour, une encapsulation, au sein de ladite trame interne mise à jour, d'au moins une trame CAN reçue depuis un dispositif client connecté de manière communicative audit dispositif d'interface donné.

7. Procédé selon l'une quelconque des revendications 4 à 6, dans lequel, lorsque ledit dispositif d'interface maître n'a pas reçu une trame interne véhiculant un jeton donné avant l'expiration d'une durée prédéterminée comptée à partir de la transmission dudit jeton donné par ledit dispositif d'interface maître, le dispositif d'interface maître est reconfiguré pour ne plus implémenter ladite fonction bouchon de sorte à permettre la circulation des trames internes le long du médium de transmission de données.

8. Procédé selon l'une quelconque des revendications 4 à 7, dans lequel ledit dispositif d'interface maître met en œuvre périodiquement ladite transmission (E320a) d'une trame interne véhiculant un jeton incrémental,
et dans lequel, au moins un dispositif d'interface génère (E320c) une information d'alerte lorsque le dispositif d'interface ne reçoit pas de trame interne véhiculant un jeton incrémental pendant une durée prédéterminée supérieure à la période de transmission des trames interne par le dispositif d'interface maître.

9. Procédé selon la revendication 8, dans lequel ladite étape (E300) d'élection d'un dispositif d'interface maître est à nouveau mise en œuvre en réponse à la génération de l'information d'alerte.

10. Produit programme d'ordinateur comprenant des instructions de code de programme pour la mise en œuvre du procédé selon l'une quelconque des revendications 1 à 9, lorsque ledit programme est exécuté sur un ordinateur.

11. Dispositif (200) électronique pour la mise en œuvre d'un dispositif d'interface (110a, 110b, 110c, 110d) d'un système pour la transmission de données en mettant en œuvre un protocole CAN, pour « Controller Area Network » en anglais, de bout en bout entre des dispositifs clients connectés audit système, le système comprenant :
- un médium (120) de transmission de données comprenant une pluralité de sections de fibre optique,
- une pluralité de dispositifs d'interface (110a, 110b, 110c, 110d) configurés pour permettre chacun la connexion de manière communicative d'au moins un dispositif client (110cl) avec le système en mettant en œuvre un protocole de transmission de données au standard CAN, les dispositifs d'interface étant connectés entre eux de manière communicative via le médium de transmission de données en mettant en œuvre un autre protocole de transmission de données, dit protocole interne, et en définissant une topologie de transmission de données en anneau,
les dispositifs d'interface étant connectés de manière communicative entre eux selon les deux sens de parcours de l'anneau de sorte à définir deux chaines de transmission de données en des directions opposées le long de l'anneau,
dans lequel le dispositif électronique comprend une machine de calcul reprogrammable (202) ou une machine de calcul dédiée configurée pour :
- implémenter une fonction bouchon stoppant la circulation des trames internes dans les deux chaines de transmission de données,
- encapsuler au moins une trame de données reçue dans un format selon le protocole CAN, dite trame CAN, depuis un dispositif client, dit dispositif client source, connecté de manière communicative à un dispositif d'interface implémentant ledit dispositif électronique, l'encapsulation délivrant au moins une trame de données dans un format selon le protocole interne, dite trame interne ; et
- transmettre ladite au moins une trame interne dans les deux chaines de transmission de données.

## Patentansprüche

1. Verfahren zur Implementierung eines Systems zur Datenübertragung durch Implementierung eines CAN-Protokolls, engl. "Controller Area Network", von Anfang bis Ende zwischen Client-Vorrichtungen, die mit dem System verbunden sind, wobei das System Folgendes umfasst:
- ein Datenübertragungsmedium (120), das eine Vielzahl von Glasfaserabschnitten umfasst,
- eine Vielzahl von Schnittstellenvorrichtungen (110a, 110b, 110c, 110d), die so eingerichtet sind, dass sie jeweils die kommunikative Verbindung von mindestens einer Client-Vorrichtung (110cl) mit dem System ermöglichen, indem sie ein Datenübertragungsprotokoll nach dem CAN-Standard umsetzen, wobei die Schnittstellenvorrichtungen untereinander über das Datenübertragungsmedium kommunikativ verbunden sind, indem sie ein anderes Datenübertragungsprotokoll, das interne Protokoll, umsetzen und eine Ring-Datenübertragungstopologie definieren,
wobei die Schnittstellenvorrichtungen gemäß den beiden Verfahrrichtungen des Rings miteinander kommunikativ verbunden sind, so dass zwei Datenübertragungsketten in entgegengesetzten Richtungen entlang des Rings definiert sind,
- eine Auswahl (E300) einer Master-Schnittstellenvorrichtung aus den Schnittstellenvorrichtungen, wobei die Master-Schnittstellenvorrichtung so eingerichtet ist, dass sie eine Staufunktion implementiert, die den Verkehr der internen Frames in den beiden Datenübertragungsketten stoppt, und indem sie mindestens einen Datenübertragungsschritt (E310) umfasst, der Folgendes umfasst:
- eine Kapselung (E310a) durch eine erste Schnittstellenvorrichtung von mindestens einem Datenframe, der in einem Format nach dem CAN-Protokoll, dem CAN-Frame, von einer Client-Vorrichtung, der Source-Client-Vorrichtung, empfangen wurde, die kommunikativ mit der ersten Schnittstellenvorrichtung verbunden ist, wobei die Kapselung mindestens einen Datenframe in einem Format gemäß dem internen Protokoll, dem inneren Frame, liefert; und
- eine Übertragung (E310b) des mindestens einen internen Frame in den beiden Datenübertragungsketten durch die erste Schnittstellenvorrichtung.

2. Verfahren nach Anspruch 1, wobei der Datenübertragungsschritt (E310) die folgenden Schritte umfasst, die von mindestens einer zweiten Schnittstellenvorrichtung durchgeführt werden, die über eine der beiden Datenübertragungsketten mindestens ein internes Frame empfangen hat:
- ein Extrahieren (E310c), innerhalb des mindestens einen internen Frames, von mindestens einem CAN-Frame für eine Client-Vorrichtung, der Empfänger-Client-Vorrichtung, die kommunikativ mit der zweiten Schnittstellenvorrichtung verbunden ist; und
- ein Übertragen (E310d) des mindestens einen CAN-Frames an die empfangende Client-Vorrichtung.

3. Verfahren nach Anspruch 1 oder 2, wobei der mindestens eine interne Frame Datenfelder umfasst, die mit separaten Übertragungskanälen verbunden sind, wobei jeder Übertragungskanal CAN-Frames transportiert, die mit Client-Vorrichtungen verbunden sind, die zu einem jeweiligen CAN-Bus gehören.

4. Verfahren nach einem der Ansprüche 1 bis 3, das einen Schritt (E320) des Systemmanagements umfasst, das Folgendes umfasst:
- ein Senden (E320a) durch die Master-Schnittstellenvorrichtung und für jede Datenübertragungskette eines internen Frames, der ein inkrementelles Token überträgt, das eine Anzahl aufeinanderfolgender Empfänge des internen Frames repräsentiert, der das Token über Schnittstellenvorrichtungen entlang der entsprechenden Datenübertragungskette überträgt.

5. Verfahren nach Anspruch 4, wobei der Schritt (E320) des Systemmanagements ein Aktualisieren (E320b) des inkrementellen Tokens umfasst, das Folgendes umfasst:
- ein Empfangen des entsprechenden internen Frames, der das Token transportiert, durch eine bestimmte Schnittstellenvorrichtung und für eine bestimmte Datenübertragungskette;
- ein Inkrementieren, innerhalb des entsprechenden internen Frames, des Tokens, so dass es repräsentativ für den Empfang des Frames durch die Schnittstellenvorrichtung ist, wobei das Inkrement ein aktualisiertes internes Frame liefert; und
- ein Übertragen, durch die Schnittstellenvorrichtung, des in der Datenübertragungskette aktualisierten internen Frames.

6. Verfahren nach Anspruch 5, wobei die Schnittstellenvorrichtung ferner vor der Übertragung des aktualisierten internen Frames eine Kapselung, innerhalb des aktualisierten internen Frames, von mindestens einem CAN-Frame durchführt, der von einer Client-Vorrichtung empfangen wird, die kommunikativ mit der Schnittstellenvorrichtung verbunden ist.

7. Verfahren nach einem der Ansprüche 4 bis 6, wobei, wenn die Master-Schnittstellenvorrichtung vor Ablauf einer vorbestimmten Zeit, gerechnet ab dem Übertragen des Tokens durch die Master-Schnittstellenvorrichtung, keinen internen Frame empfangen hat, der einen bestimmten Token transportiert, die Master-Schnittstellenvorrichtung so rekonfiguriert ist, dass sie die Staufunktion nicht mehr implementiert, sodass die internen Frames entlang des Datenübertragungsmediums zirkulieren können.

8. Verfahren nach einem der Ansprüche 4 bis 7, wobei die Master-Schnittstellenvorrichtung periodisch die Übertragung (E320a) eines internen Frames implementiert, der ein inkrementelles Token transportiert,
und wobei mindestens eine Schnittstellenvorrichtung (E320c) eine Warninformation erzeugt, wenn die Schnittstellenvorrichtung keinen internen Frame empfängt, der ein inkrementelles Token über einen vorbestimmten Zeitraum überschreitet, der größer ist als der Zeitraum, in dem die internen Frames von der Master-Schnittstellenvorrichtung übertragen werden.

9. Verfahren nach Anspruch 8, wobei der Schritt (E300) der Auswahl einer Master-Schnittstellenvorrichtung erneut als Reaktion auf die Generierung der Warninformation implementiert wird.

10. Computerprogrammprodukt, das Programmcodeanweisungen zur Implementierung des Verfahrens nach einem der Ansprüche 1 bis 9 umfasst, wenn das Programm auf einem Computer ausgeführt wird.

11. Elektronische Vorrichtung (200) zur Implementierung einer Schnittstellenvorrichtung (110a, 110b, 110c, 110d) eines Systems zur Datenübertragung durch Implementierung eines CAN-Protokolls, engl. "Controller Area Network", von Anfang bis Ende zwischen Client-Vorrichtungen, die mit dem System verbunden sind, wobei das System Folgendes umfasst:
- ein Datenübertragungsmedium (120), das eine Vielzahl von Glasfaserabschnitten umfasst,
- eine Vielzahl von Schnittstellenvorrichtungen (110a, 110b, 110c, 110d), die so eingerichtet sind, dass sie jeweils die kommunikative Verbindung von mindestens einer Client-Vorrichtung (110cl) mit dem System ermöglichen, indem sie ein Datenübertragungsprotokoll nach dem CAN-Standard umsetzen, wobei die Schnittstellenvorrichtungen untereinander über das Datenübertragungsmedium kommunikativ verbunden sind, indem sie ein anderes Datenübertragungsprotokoll, das interne Protokoll, umsetzen und eine Ring-Datenübertragungstopologie definieren,
wobei die Schnittstellenvorrichtungen gemäß den beiden Verfahrrichtungen des Rings miteinander kommunikativ verbunden sind, so dass zwei Datenübertragungsketten in entgegengesetzten Richtungen entlang des Rings definiert sind,
wobei die elektronische Vorrichtung eine reprogrammierbare Rechenmaschine (202) oder eine dedizierte Rechenmaschine umfasst, die für Folgendes eingerichtet ist:
- Implementieren einer Staufunktion, die den Verkehr der internen Frames in den beiden Datenübertragungsketten stoppt,
- Verkapseln mindestens eines Datenframes, der in einem Format nach dem CAN-Protokoll, dem CAN-Frame, von einer Client-Vorrichtung, der Source-Client-Vorrichtung, empfangen wurde, die kommunikativ mit einer Schnittstellenvorrichtung verbunden ist, die die elektronische Vorrichtung implementiert, wobei die Verkapselung mindestens einen Datenframe in einem Format gemäß dem internen Protokoll, dem internen Frame, liefert; und
- Senden des mindestens einen internen Frames in den beiden Datenübertragungsketten.

## Claims

1. Method for implementing a system for data transmission using a CAN protocol, standing for "Controller Area Network" in English, end-to-end between client devices connected to said system, the system comprising:
- a data transmission medium (120) comprising a plurality of optical fibre sections,
- a plurality of interface devices (110a, 110b, 110c, 110d) configured to each enable the communicative connection of at least one client device (110cl) with the system by implementing a CAN standard data transmission protocol, the interface devices being communicatively connected to each other via the data transmission medium by implementing another data transmission protocol, referred to as internal protocol, and by defining a ring data transmission topology,
the interface devices being communicatively connected to each other in the two travel directions of the ring so as to define two data transmission chains in opposite directions along the ring,
- electing (E300) a master interface device from the interface devices, the master interface device being configured to implement a stopper function stopping the circulation of the internal frames in the two data transmission chains, and in that it comprises at least one data transmission step (E310) comprising:
- encapsulating (E310a), by a first interface device, at least one data frame received in a format according to the CAN protocol, a so-called CAN frame, from a client device, a so-called source client device, connected communicatively to the first interface device, the encapsulation delivering at least one data frame in a format according to the internal protocol, referred to as internal frame; and
- transmitting (E310b), by the first interface device, said at least one internal frame in the two data transmission chains.

2. Method according to claim 1, wherein the data transmission step (E310) comprises the following steps implemented by at least one second interface device that received said at least one internal frame via one of the two data transmission chains:
- extracting (E310c), within said at least one internal frame, at least one CAN frame destined for a client device, a so-called recipient client device, communicatively connected to said second interface device; and
- transmitting (E310d) said at least one CAN frame to said recipient client device.

3. Method according to claim 1 or 2, wherein said at least one internal frame comprises data fields associated with distinct transmission channels, each transmission channel conveying CAN frames associated with client devices belonging to a respective CAN bus.

4. Method according to any one of claims 1 to 3, comprising a step (E320) of managing the system comprising:
- transmitting (E320a), by the master interface device and for each data transmission chain, an internal frame conveying an incremental token representative of a number of successive receptions of said internal frame conveying the token by interface devices along the corresponding data transmission chain.

5. Method according to claim 4, wherein the system management step (E320) comprises updating (E320b) the incremental token comprising:
- receiving, by a given interface device and for a given data transmission chain, the corresponding internal frame carrying said token;
- incrementing, within said corresponding internal frame, the token so as to be representative of the reception of the frame by the interface device, said increment delivering an updated internal frame; and
- transmitting, by said interface device, said internal frame updated in the given data transmission chain.

6. Method according to claim 5, wherein the given interface device further executes, prior to transmission of said updated internal frame, encapsulation, within said updated internal frame, of at least one CAN frame received from a client device communicatively connected to said given interface device.

7. Method according to any one of claims 4 to 6, wherein, when said master interface device has not received an internal frame carrying a given token before the expiration of a predetermined period counted from the transmission of said given token by said master interface device, the master interface device is reconfigured to no longer implement said stopper function so as to allow the circulation of the internal frames along the data transmission medium.

8. Method according to any one of claims 4 to 7, wherein said master interface device periodically implements said transmission (E320a) of an internal frame carrying an incremental token,
and wherein at least one interface device generates (E320c) alert information when the interface device does not receive an internal frame carrying an incremental token for a predetermined period greater than the period of transmission of the internal frames by the master interface device.

9. Method according to claim 8, wherein said step (E300) of electing a master interface device is again implemented in response to the generation of the alert information.

10. Computer program comprising program code instructions for implementing the method according to any one of claims 1 to 9 when said program is executed on a computer.

11. Electronic device (200) for implementing an interface device (110a, 110b, 110c, 110d) of a system for transmitting data using a CAN protocol, standing for "Controller Area Network", end-to-end between client devices connected to said system, the system comprising:
- a data transmission medium (120) comprising a plurality of optical fibre sections,
- a plurality of interface devices (110a, 110b, 110c, 110d) configured to each enable the communicative connection of at least one client device (110cl) with the system by implementing a CAN standard data transmission protocol, the interface devices being communicatively connected to each other via the data transmission medium by implementing another data transmission protocol, referred to as internal protocol, and by defining a ring data transmission topology,
the interface devices being communicatively connected to each other in the two travel directions of the ring so as to define two data transmission chains in opposite directions along the ring,
wherein the electronic device comprises a reprogrammable computing machine (202) or a dedicated computing machine configured to:
- implement a stopper function stopping the circulation of internal frames in the two data transmission chains,
- encapsulating at least one data frame received in a format according to the CAN protocol, a so-called CAN frame, from a client device, a so-called source client device, connected communicatively to an interface device implementing said electronic device, the encapsulation delivering at least one data frame in a format according to the internal protocol, a so-called internal frame; and
- transmitting said at least one internal frame in the two data transmission chains.
